Europäisches Patentamt

European Patent Office

Office européen des brevets

(19)

(11) Publication number: **0 103 657 B1**

# EUROPEAN PATENT SPECIFICATION

(45) Date of publication of patent specification: **13.03.91**    (51) Int. Cl.⁵: **C08F 279/04**

(21) Application number: **82201156.5**

(22) Date of filing: **17.09.82**

The file contains technical information submitted
after the application was filed and not included in
this specification

(54) **ABS type resins having disperse particles of a rubber exhibiting a high solution viscosity and a method for its preparation.**

(43) Date of publication of application:
**28.03.84 Bulletin 84/13**

(45) Publication of the grant of the patent:
**13.03.91 Bulletin 91/11**

(84) Designated Contracting States:
**AT BE CH DE FR GB IT LI NL SE**

(56) References cited:
**US-A- 4 183 877**
**US-A- 4 187 260**
**US-A- 4 252 911**

(73) Proprietor: **DOW CHEMICAL (NEDERLAND)**
**B.V.**
**Herbert H. Dowweg 4 P.O. Box 48**
**NL-4530 AA Terneuzen(NL)**

(72) Inventor: **Alle, Narasaiah**
**Reggestraat 30**
**NL-4535 GH Terneuzen(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

**Description**

This invention relates to rubber-reinforced copolymers of a monovinylidene aromatic monomer and unsaturated nitrile monomer having a rubber dispersed as small rubber particles throughout the copolymeric matrix, and to a method for preparing the rubber-reinforced copolymer.

Rubber-reinforced (or modified copolymers of a monovinylidene aromatic such as styrene and an unsaturated nitrile such as acrylonitrile having particulates of rubber, generally an alkadiene rubber, dispersed throughout the copolymeric matrix (conventionally referred to as ABS resins) are employed in a wide variety of commercial applications such as packaging, refrigerator linings, furniture, domestic appliances and toys. It is well known that the physical properties of an ABS resin such as toughness (i.e., the combination of elongation and impact strength), at both room and lower temperatures, are affected by the size, composition and morphology of the dispersed rubber particles and/or the concentration of rubber in the rubber-reinforced copolymers. For example, to achieve the balance of physical properties in many applications, the rubber particles are necessarily dispersed through the copolymer matrix at a relatively small size, e.g., less than 1.5 μm.

Heretofore, ABS resins have been prepared using a variety of polymerization techniques. For example, in one method for preparing an ABS resin, preformed rubber particles are admixed with styrene/acrylonitrile prior, during or subsequent to the polymerization of said monomers. In general, emulsion polymerization techniques are employed to prepare the preformed rubber particles which then comprise dense, rubber droplets of coagulated latex. Using said techniques, desirably small rubber particles can be prepared from essentially all rubbers which can be prepared using emulsion polymerization techniques. Unfortunately, significant costs are incurred in the preparation of the rubber particles using emulsion polymerization techniques and the emulsion polymerization aids such as the emulsifiers often haven an undesirable effect on the properties of the resulting ABS resin product. Moreover, a relatively high concentration of the emulsion polymerized rubber particles is generally required to impart the desired balance of properties to the resulting rubber-reinforced copolymer product.

An alternative, more economical, method for preparing an ABS resin consists of mass polymerization techniques. Such techniques involve dissolving the rubber in a mixture of the styrene and acrylonitrile monomers and subsequently polymerizing the monomers. The resulting copolymer initially forms a discrete, discontinuous phase until, after sufficient polymerization, the rubber separates as a plurality of particles dispersed through a continuous phase now containing the copolymer (so-called "phase-inversion"). Polymerization is completed and any solvent or unreacted monomer thereafter removed from the resulting product. (See, for example, U.S. Patent No. 3.243,481). A similar process involves a combination of mass with suspension polymerization. In said method, following phase inversion, the polymerization mixture is suspended in water and polymerization completed. (See, for example, U.S. patent No. 3,509,237). Although an ABS resin can economically and effectively be prepared using either mass or mass/suspension polymerization techniques, ABS resins having the desired balance of physical properties have not heretofore been prepared using conventional mass or mass/suspension polymerization techniques with certain high molecular weight rubbers such as an essentially linear, high molecular weight, low-cis homopolymer of butadiene. Specifically, although the particle size of dispersed rubber can be reduced by increasing the rate of mechanical agitation in the polymerization reactor, an ABS resin wherein the high molecular weight rubber exhibits a desirably small particle size (i.e., a volume average particle size of less than 1.5μm) at a sufficiently high concentration to impart the desired properties to the final product has not previously been prepared using mass or mass/suspension polymerization techniques.

In US-A 4,252,911 a continuous mass polymerization process for producing ABS polyblends is described, wherein a monomer formulation of monoalkenyl aromatic and alkenyl nitrile monomers having a conjugated diene rubber dissolved therein is continuously charged to a first, stirred reaction zone operating at a steady conversion of said monomers of about 5 to 45% forming a partially polymerized first mixture having said rubber dispersed as grafted rubber particles, followed by continuously polymerizing said first mixture in a second stirred reaction zone by substantial linear flow polymerization under evaporative cooling of said monomers to a second partially polymerized mixture containing about 50 to 90% of ABS polyblends solids and separating said solids from said second mixture as an ABS polyblend.

In US-A 4,187,260 a process for the mass polymerization of solutions comprising monoalkenyl aromatic monomers and optionally monoalkenyl nitrile monomers having a diene rubber dissolved therein is described, which process comprises dissolving a minor amount of an organic diperoxide compound in said solution and mass polymerizing said solution, said diperoxide initiating a higher molecular weight polymer fraction providing said polymer with a broader molecular weight distribution.

In view of the stated deficiencies of the ABS resins and the methods for their preparation disclosed in the prior art, it remains highly desirable to provide an effective and economical method for preparing a rubber-reinforced copolymer of a monovinylidene aromatic and a unsaturated nitrile having discrete particles of a high molecular weight rubber dispersed throughout the copolymer matrix using mass or mass/suspension polymerization techniques.

Accordingly, in one aspect the present invention is a rubber-reinforced copolymer comprising a copolymer matrix derived from one or more monovinylidene aromatic monomers and one or more unsaturated nitrile monomers and, optionally, other comonomers which copolymer is characterized by having at least 6 weight percent of a rubber based on the total weight of the rubber and copolymer, which rubber exhibits a viscosity, as a 5 weight percent solution in styrene, of at least 120 mPa.s. (centipoise) dispersed as discrete particles in the matrix, said rubber particles containing occlusions of grafted and/or ungrafted copolymer and having a volume average particle size of 1.5μm or less.

The rubber-reinforced copolymers of the present invention often exhibit an excellent balance of properties. For example, in a preferred embodiment wherein the rubber is a linear, high molecular weight, low-cis homopolymer of butadiene, the rubber-reinforced copolymers exhibit unexpected practical toughness with a ductile fracture mechanism and surprisingly high degree of gloss with good properties (e.g., elongation and impact strength) at both room and lower temperatures, (e.g. -20° C.).

In another aspect, the present invention is a method of preparing a rubber-reinforced copolymer of a monovinylidene aromatic monomer, an unsaturated nitrile monomer and, optionally, one or more other comonomers comprising the steps of mass polymerizing a solution of the rubber and the monomers under conditions such that phase inversion occurs and the rubber becomes dispersed as particles and continuing polymerization. The method is characterized by the use of a rubber which exhibits a viscosity as a 5 weight % solution in styrene, of at least 120 mPa.s (centipoises)in the monomer solution in an amount of at least 5 weight % based on the total weight of the monomers and the rubber; and polymerization conditions prior to phase inversion which form copolymer having a sufficiently high molecular weight such that upon phase inversion and forming of rubber particles, the rubber becomes dispersed at a volume average particle size of 1.5μm or less without excessively agitating the polymerization mixture. Following phase inversion and sizing of the rubber particles, polymerization is completed, generally using either mass or suspension polymerization techniques. Using mass polymerization techniques, subsequent to obtaining the desired conversion, the polymerization mixture is subjected to conditions sufficient to remove the unreacted monomers and/or to cross-link the rubber.

In the described method, the copolymer of the monovinylidene aromatic monomer and unsaturated nitrile monomer exhibits a sufficiently high molecular weight at phase inversion such that, upon phase inversion and subsequent sizing, the rubber is readily dispersed throughout the continuous phase comprising the copolymer as discrete particles having a desirably small particle size. Such small particle size is achieved through chemical modification of the polymerization mixture without requiring excessive mechanical energy (i.e., agitation such as homogenization). Therefore, an ABS resin can effectively be prepared from a rubber which exhibits a high solution viscosity using mass or mass/suspension polymerization techniques.

Due to their excellent balance of physical properties, the rubber-reinforced copolymers of the present invention are useful in a wide variety of applications such as refrigerator liners, household appliances, toys and furniture.

The rubber-reinforced copolymers of the present invention comprise a copolymer matrix of at least one monovinylidene aromatic monomer and at least one unsaturated nitrile monomer having a high viscosity rubber dispersed throughout the copolymer phase at relatively small particle sizes. Representative monovinylidene aromatic monomers include styrene, alkyl-substituted styrenes such as a-alkylstyrene (e.g., α-methylstyrene and α-ethylstyrene) and ring-substituted styrenes (e.g., vinyltoluene, particularly p -vinyltoluene and o -ethylstyrene, t -butyl-styrene and 2,4-dimethyl-styrene); ring-substituted halostyrenes such as chloro-styrene, 2,4-dichloro-styrene and styrene substituted with both a halo and alkyl group such as 2-chloro-4-methyl-styrene, vinyl anthracene and mixtures thereof. In general, the polymer matrix is preferably derived from styrene or a combination of styrene and α-methylstyrene (advantageously, from 10 to 50, more advantageously from 15 to 40, weight percent of the α-methyl-styrene based on the total weight of the styrene and α-methyl-styrene). Styrene is the most preferred monovinylidene aromatic monomer.

Representative unsaturated nitrile monomers are acrylonitrile, methacrylonitrile, ethacrylonitrile, and mixtures thereof. Preferred of the unsaturated nitriles is acrylonitrile.

The amounts of the monovinylidene aromatic and unsaturated nitrile monomers most advantageously employed herein will vary depending on the physical and chemical properties desired in the final, rubber-modified product. In general, the rubber-reinforced copolymer will advantageously comprise from 5 to 35, preferably from 15 to 25, weight percent of the unsaturated nitrile, and from 95 to 65, preferably from 85 to 75, weight percent of the monovinylidene aromatic based on the total weight of the monovinylidene aromatic and unsaturated nitrile monomers.

Minor amounts of other comonomers can also be employed in combination with the unsaturated nitrile and monovinylidene aromatic. Representative of such other comonomers are the polyvinyl aromatic monomers; the conjugated dienes such as butadiene and isoprene; the $\alpha,\beta$ -ethylenically unsaturated carboxylic acids and esters thereof such as acrylic acid, methacrylic acid, methylacrylate, methyl methacrylate, ethylacrylate and 2-ethylhexyl acrylate; the ethylenically unsaturated amides such as acrylamide and methacrylamide; vinylidene chloride and vinylidene bromide and vinyl esters such as vinyl acetate. If employed, these comonomers will generally be employed in amounts less than 10, more generally less than 5, weight percent based on the total weight of the monomers employed in preparing the rubber-reinforced product.

The rubber component employed in the rubber-reinforced copolymer is a rubber which exhibits a solution viscosity, as a 5 weight percent solution in styrene, of at least 120 mPa.s (centipoise) at 25° C when said viscosity is measured using a Canon-Fenske capillary viscometer (Capillarly No. 400, 1.92 mm inside diameter). Hereinafter, a rubber exhibiting such high solution viscosity will be referred to as a "high viscosity rubber". Preferably, the solution viscosity of the rubber, as a 5 weight percent solution in styrene is at least 140, more preferably 150 mPa.s (centipoise). Although the present invention is suitably employed using a rubber having a solution viscosity, as a 5 weight percent solution in styrene, of 500 mPa.s (centipoise) or more, the rubber will generally advantageously exhibit a viscosity of less than 300, more advantageously less than 250 mPa.s (centipoise). In general, the Moony viscosity of such rubbers (ML-4,100° C) is at least 40, more preferably 45. Representative of such rubbers exhibiting a high solution viscosity are the linear, high molecular weight, low-cis homopolymers of butadiene. In general, the cis content of such rubbers is less than 55, more preferably less than 50 percent as determined by conventional IR spectrometry techniques and the weight average molecular weight, as determined by gel permeation chromotography techniques as described by ASTM designated D-3536 and expressed without correction for the differences between the rubber and polystyrene standards, is at least 325,000, preferably 375,000, with the ratio of weight average molecular weight to number average molecular weight being less than 3, more preferably less than 2.75. Representative linear, high molecular weight, low-cis homopolymers of butadiene include Diene 55 (TM) sold by the Firestone Tire and Rubber Co., CB-55-NFA and HX529-B sold by Bayer, Intene 55 (TM) sold by International Synthetic Rubber and Asadene 55 (TM) sold by Asahi Chemical. Preferred rubbers are the homopolymers of 1,3-butadiene which have a cis content of less than 50 percent, a weight average molecular weight of 400,000 to 600,000 with a ratio of weight average to number average molecular weight of less than 2.6.

The amounts of the high viscosity rubber most advantageously employed herein will depend on many factors including the specific high viscosity rubber employed, the specific type and amount of other rubbers, if any, employed in combination with the high viscosity rubber and the physical and chemical properties desired in the final, rubber-modified product. To obtain the most desired properties, the rubber-reinforced copolymer product will comprise at least 6 weight percent of the high viscosity rubber based on the total weight of the copolymer and rubber. Preferably, the rubber-reinforced copolymer comprises from 7 to 15, more preferably from 8 to 13 weight percent of the high viscosity rubber based on the weight of the copolymer and rubber. The rubber in the rubber-reinforced copolymer products of the present invention is dispersed throughout the copolymer matrix at a volume average particle size of 1.5 μm or less, preferably less than 1.2 μm, more preferably less than 1.1 μm. In general, the dispersed rubber particles possess a volume average particle size of at least 0.1, preferably at least 0.2 μm. The rubber particles contain occlusions of grafted and ungrafted polymer. Typically, the rubber particles exhibit a so-called "coiled" or "cellular" morphology. Said particles size (diameter) is the diameter of the particles, including the occlusions present in the dispersed rubber particles, measured using conventional techniques such as by a Coulter Counter supplemented by visual phase contrast microscopy or electron microscopy techniques.

In the preparation of the rubber-reinforced copolymer the high viscosity rubber is dissolved in the monomers to form at least a 5 weight percent solution, said weight percent being based on the total amounts of rubber and monomers employed. In general, the concentration of the rubber in said solution is less than 13.5 weight percent based on the total weight of rubber and monomers.

In general, but optionally, the monomer/rubber solution will contain an organic liquid diluent. Organic liquid diluents are normally liquid organic materials which do not boil at the polymerization conditions employed and which form a solution with the polymerizable monomers and the polymer prepared therefrom. Representative organic liquid diluents include aromatic and inertly substituted aromatic hydrocarbons such as toluene, benzene, ethylbenzene, xylene; saturated or inertly substituted, saturated aliphatics having either straight or branched chains of five or more carbon atoms such as heptane, hexane, octane; alicyclic or

inertly substituted alicyclic hydrocarbons having five or six carbon atoms such as cyclohexane. Preferred of such organic liquid diluents are the inertly substituted aromatics; with ethylbenzene and xylene being the most preferred. In general, the organic liquid diluent is employed in amounts sufficient to improve the processability, e.g., flow characteristics, of the polymerization mixture. Such amounts will vary depending on the rubber, monomer and diluent employed; the process equipment and the desired degree of polymerization. In general, if employed, the polymerization mixture will normally contain from 2 to 30 weight percent of the diluent based on the total weight of the rubber, monomer and diluent.

In addition, the mass polymerization mixture will contain other materials such as polymerization aids, e.g., polymerization initiators or chain transfer agents, an antioxidant (e.g., an alkylated phenol such as di-tert -butyl-p-cresol or phosphites such as trisnonyl phenyl phosphite); a mold release agent (e.g., zinc stearate), and/or a plasticizer or lubricant such as butylstearate, mineral oil or dioctyl phthalate which are optionally employed in the polymerization.

The resulting monomer/rubber solution is subsequently mass polymerized. During polymerization, the rubber is grafted with the polymerized monomers and the monomers copolymerized, with the copolymerized monomers coming out of solution and forming a discontinuous polymer phase dispersed throughout a continuous phase of the solution of rubber and monomers. Eventually, after sufficient amounts of the monomer are polymerized, the discontinuous copolymer phase becomes the continuous phase with the grafted rubber forming a discontinuous phase dispersed through the continuous copolymer phase. This phenomenon is referred to as "phase inversion" which term conventionally refers to the conversion of the copolymer, upon the polymerization of sufficient amounts of the polymerizable monomers, from a discontinuous phase dispersed in the continuous phase of the unpolymerized monomer through the point where there is no distinct continuous and no distinct discontinuous phase in the polymerization mixture, to a continuous copolymer phase having the rubber dispersed as discrete particles therethrough. Preferably, at phase inversion, the rubber is sufficiently grafted such that the disperse rubber particles, following initial sizing, are capable of retaining essentially the same average particle size and morphological properties throughout the remainder of the polymerization process.

In the practice of the present invention, the mass polymerization is conducted at conditions to form a copolymer of the monovinylidene aromatic(s) and unsaturated nitrile(s) having a sufficiently high molecular weight such that, upon the hereinbefore described phase inversion and subsequent sizing of the rubber particles, the rubber is dispersed as discrete particles having a volume average particle size of less than 1.5 µm. Preferably, the molecular weight of the copolymer is sufficiently high such that the rubber is capable of being dispersed through the copolymer matrix at a volume average particle size of less than 1.2 µm, more preferably less than 1.1 µm.

The molecular weight of the copolymer at phase inversion necessary for the formation of rubber particles of a desirably small size depends on a variety of factors, particularly the composition of the polymerization mixture (e.g., the properties, particularly, the molecular weight, and concentration of the rubber and the type and concentration of the organic liquid diluent, if any, employed). In general, to obtain the small size rubber particles, the weight average molecular weight ( $\overline{M}_w$ ) of the copolymer at phase inversion is at least 0.6, preferably at least 0.7, more preferably at least 0.8, times the $\overline{M}_w$ of the rubber employed. Specifically, using the preferred linear, high molecular weight, low-cis polybutadiene rubbers having a $\overline{M}_w$ from 400,000 to 450,000, the $\overline{M}_w$ of the copolymer at phase inversion should be 240,000 or more. In general, the $\overline{M}_w$ of the copolymer at phase inversion should not exceed 1.8 times the $\overline{M}_w$ of the rubber and will advantageously be less than 1.5 times the $\overline{M}_w$ of the rubber. Most preferably, the $\overline{M}_w$ of the copolymer is from 0.8 to 1.2 times the $\overline{M}_w$ of the rubber . For the purposes of this invention, the molecular weight of the copolymer is determined on the ungrafted polymer which has been extracted from the remainder of the polymerization mixture at phase inversion or immediately thereafter by soaking the polymerization mixture in acetone for 24 hours, centrifuging the acetone containing mixture, recovering the super-natant liquid and drying the liquid to obtain the ungrafted copolymer. The molecular weight of this residue is then determined using the gel permeation chromatography techniques described in ASTM D-3536 and expressed without correction for the differences between copolymer and the polystyrene standards. Preferably, the $\overline{M}_w$ of the copolymer at phase inversion is at least 300,000 and the number average molecular weight ( $\overline{M}_n$ ) is at least 150,000- More preferably, the $\overline{M}_w$ is at least 360,000 and the $\overline{M}_n$ is at least 175,000.

Such molecular weights are more than those obtained in the preparation of ABS resins using conventional mass polymerization processes and one or more modifications are required in the polymerization process to prepare the copolymer having such increased molecular weight. For example, the amount and type of chain transfer agent employed prior to phase inversion have been found to affect the molecular weight of the copolymer. Specifically, increases in molecular weight are obtained by reducing the concentration of the chain transfer agent in the polymerization system and, in one embodiment of the present invention, polymerization is conducted employing a sufficiently low concentration of chain transfer agent such that a copolymer of the desirably high molecular weight can be prepared. Specifically, in conventional mass polymerization processes for preparing ABS resins, a chain transfer agent such as an alkyl mercaptain is added with the initial feed stream to the polymerization system. In this invention, this amount of chain transfer agent in the feed stream is reduced to a desirably low concentration. Advantageously, the feed stream contains no chain transfer agent and any chain transfer agent is added after phase inversion or, if added prior to phase inversion, only after sufficient amounts of the comonomers have been polymerized. Optionally, the preparation of the rubber-reinforced copolymer is conducted in the absence of a chain transfer agent, with the resulting rubber-reinforced product exhibiting high impact properties.

Alternatively, the type and amount of polymerization initiator has been found to affect the molecular weight of the copolymer. Specifically, the mass polymerization mixture will conventionally contain a polymerization initiator which is generally a free radical generating material such as chemical initiators including the peroxygen initiatators (e.g., the perester initiators such as tertiarybutyl peroxybenzoate, di-t - butyl peroxyazelate and tertiarybutyl peroxyacetate), dibenzoylperoxide or mixtures of one or more chemical initiators or photochemical initiators.

The initiators are employed in an effective amount to initiate formation of the copolymer and the grafting of sufficient amounts of the copolymer to the rubber such that the dispersed rubber particles exhibit the desired size stability, which amount is generally at least 0.01, often at least 0.02, weight percent based on the weight of monomer in the feed. The maximum concentration of the initiator is generally dictated by the properties desired in the final product and economic considerations, with the initiator generally being employed in amounts less than 0.1 percent, by weight of the monomers in the feed. Within these compositional limitations, if the polymerization rate is maintained constant such as by reducing the temperature of polymerization, increasing the amount of the initiator in the polymerization mixture and/or increasing the activity of the initiator such as using a difunctional initiator, e.g., a diperoxide, as a partial or total replacement for a monofunctional initiator will generally increase the molecular weight of the resulting copolymer if the polymerization rate is maintained constant such as by reducing the temperatures of polymerization. Alternatively, increasing the molecular weight of the copolymer can be achieved by reducing the temperatures of polymerization while maintaining the other polymerization conditions constant, e.g., same concentration and activity of polymerization initiator.

In an alternative method, increases in the molecular weight of the copolymer are obtained by the addition of a molecular weight extender, e.g., a divinyl compound, to the polymerization mixture. Yet another alternative method for preparing a copolymer of a sufficiently high molecular weight involves conducting the polymerization prior to phase inversion using a reduced concentration of the organic reaction diluent.

Since the conditions at which polymerization is conducted are interrelated, one modification to the polymerization reaction will often require one or more other modifications to obtain the rubber-reinforced copolymer having the desired properties. For example, when the polymerization temperatures prior to phase inversion are reduced so as to increase the molecular weight of the copolymer, it is generally necessary to use higher polymerization temperatures following phase inversion to achieve the desired amounts of conversion. These interrelations in the polymerization conditions and the required modifications in the conditions of polymerization to obtain a desirable product are generally known to the skilled artisan and can be determined using simple experimental techniques.

Of the described techniques, the preferred methods to obtain a copolymer having the desired molecular weight consist of regulating the concentration of the chain transfer agent prior to phase inversion or conducting the polymerization in the presence of a desired amount of polymerization initiator and/or sufficiently low temperatures. Most preferably, the polymer of a sufficiently high molecular weight is obtained by regulating the concentration of the chain transfer agent within the polymerization mixture prior to phase inversion.

In general, continuous mass polymerization techniques are advantageously employed in preparing the rubber-reinforced copolymer product. Preferably, the polymerization is conducted in one or more substantially linear, stratified flow or so-called "plug-flow" type reactors such as described in U.S. Patent No. 2,727,884, which may or may not comprise recirculation of a portion of the partially polymerized product or, alternatively, in a stirred tank reactor wherein the contents of the reactor are essentially uniform throughout, which stirred tank reactor is generally employed in combination with one or more "plug-flow" type reactors. The temperatures at which polymerization is most advantageously conducted are dependent on a variety of factors including the specific initiator and the type and concentration of rubber, comonomers and reaction diluent, if any, employed. In general, polymerization temperatures from 60° to 160° C are employed prior to phase inversion with temperatures from 100° to 190°C being employed subsequent to phase inversion. Mass polymerization at such elevated temperatures is continued until the desired conversion of the monomers to polymer is obtained. Generally, conversion of from 65 to 90, preferably from 70 to 85, weight percent of the monomers added to the polymerization system (i.e., monomer added in the feed and any additional stream, including any recycle stream) to polymer is desirable.

Following conversion of a desired amount of monomer to polymer, the polymerization mixture is then subjected to conditions sufficient to cross-link the rubber and remove any unreacted monomer. Such cross-linking and removal of the unreacted monomer, as well as any reaction diluent, if employed, and other volatile materials is advantageously conducted employing conventional devolatilization techniques, such as introducing the polymerization mixture into a devolatilizing chamber, flashing off the monomer and other volatiles at elevated temperatures, e.g., from 200° to 300°C, under vacuum and removing them from the chamber.

In general, using said continuous mass polymerization techniques at some point during the polymerization, preferably following phase inversion and subsequent sizing of the rubber particles, a second monomer-containing mixture is added to the polymerization system.

Said second monomer-containing mixture is often advantageously a recycle stream consisting of volatiles recovered in the devolatilization step. While the relative proportions of the monomers, based on a total monomer weight, in the recycle can be identical to their relative proportions in the feed stream, the second monomer stream generally comprises greater concentrations of the organic liquid diluent than found in the original feed.

Alternatively, a combination of mass and suspension polymerization techniques are employed. Using said techniques, following phase inversion and subsequent size stabilization of the rubber particles, the partially polymerized product can be suspended with or without additional monomers in an aqueous medium which contains a polymerization initiator and polymerization subsequently completed. The rubber-reinforced is subsequently separated from the aqueous medium by acidification, centrifugation or filtration. The recovered product is then washed with water and dried.

The rubber-reinforced copolymer products of the present invention can also be prepared having disperse, rubber particles of the same or different rubbers having two or more distinct particle sizes, e.g., rubber particles exhibiting a bimodal size distribution. For example, a rubber-reinforced copolymer product having a bimodal particle size distribution can be prepared by mechanically blending the rubber-reinforced copolymer product containing the high viscosity rubber of a first particular size with the desired amounts of another rubber-reinforced copolymer containing either the same or a different rubber dispersed throughout the copolymer matrix at a second and different particle size. In another method, a partially polymerized product comprising the copolymer having the high viscosity rubber dispersed as particles of a first size is admixed with a partial polymerized product having the same or a different rubber dispersed therethrough at a seond particle size. Polymerization of the resulting mixture is subsequently completed. In a preferred method for preparing a product having a bimodal particle size distribution of rubber, a second rubber-containing mixture comprising a solution of rubber in at least one monovinylidene aromatic and/or un unsaturated nitrile is admixed with the polymerization reaction mixture comprising a partial polymerized product of a copolymer having the high solution viscosity rubber dispersed therethrough and polymerization subsequently completed. Using similar techniques, a rubber-reinforced copolymer can be prepared having two or more rubbers, at least one of which is a high viscosity rubber, dispersed throughout the copolymer matrix at the same or essentially the same particle size.

The following examples are set forth to illustrate the advantages of the present invention and should not be construed to limit its scope. In the examples, all parts and percentages are by weight unless otherwise indicated.

## EXAMPLE 1

To prepare a rubber-reinforced copolymer of styrene and acrylonitrile comprising a copolymer matrix having rubber of a high molecular weight, low-cis homopolymer of butadiene dispersed therethrough, 710 parts of styrene, 363 parts of acrylonitrile, 268 parts of ethylbenzene, 109 parts of a linear, high molecular weight, low-cis homopolymer of butadiene having a solution viscosity as a five percent solution in styrene of 150 mPa.s (centipoise) and 0.2 parts of a free radical initiator are added to a sufficiently sized batch reactor equipped with agitation and heating and cooling means. The reaction mixture is exposed to a constant agitation at a rate of 125 rpm. At the end of four hours, the reactor contains 24.4 percent solids and phase inversion is recently completed. The rubber particles dispersed throughout the continuous, copolymer phase exhibit a volume average particle diameter of 1.44 μm. At the end of five hours, the rubber particle exhibit a volume average particle diameter of 1.16 μm. At this point, the size of the rubber particles is essentially stabilized. At the end of six hours, the volume average particle size of the rubber particles is 1.13 μm. At this time, an additional 51 parts of styrene, 173 parts of ethylbenzene, 3 parts of an antioxidant and 2.5 parts of a chain transfer agent are added to the reaction vessel and the agitator speed is reduced to 60 rpm. Polymerization is continued for an additional hour and fifteen minutes. The temperature of the reaction mixture during polymerization is initially 95° C and is continuously increased during the polymerization to a final temperature of 155° C. Subsequently, the reaction mixture is placed in a vacuum oven at 220° C for 1 hour where the rubber is cross-linked and the residual monomer and ethylbenzene removed from the polymerization mixture. The volume average particle size of the rubber in the resulting product is found to be 1.1 μm. when determined using a commercially available particle size analyzer (e.g., Coulter Counter) supplemented as necessary by transmission electron microscopy.

COMPARATIVE EXAMPLE I

A rubber rubber-reinforced copolymer of styrene and acrylonitrile comprising a copolymer matrix having dispersed particles of a high molecular weight, low-cis homopolymer of butadiene dispersed therethrough is prepared using the techniques described in Example No. 1 except that the feed stream contains 2 parts of a chain transfer agent. After four hours, phase inversion has occured. The volume average particle size of the dispersed rubber phase at this time is 3.6 μm. An additional monomer stream having the same composition as the additional monomer stream added in Example No. 1 is added to the reactor at this time and the agitator speed is reduced to 60 rpm. Polymerization is continued for an additional three hours (7 hours total). Following removal of the volatiles, the disperse rubber particles have a volume average particle size of 2.4 μm.

As evidenced by Example No. 1, a rubber-reinforced copolymer of a monovinylidine aromatic and an unsaturated nitrile having a rubber which exhibits a high solution viscosity dispersed throughout the copolymer matrix at a sufficiently small particle size can be prepared using mass polymerization techniques by the methods of this invention. The relatively small particle size is obtained by preparing a copolymer of a sufficient molecular weight, by delaying the addition of the chain transfer agent until after phase inversion, such that the ratio of viscosity of the rubber to the viscosity of the continuous copolymer phase upon phase inversion is sufficiently low to allow the preparation of the relatively small particles without excessive mechanical agitation. If the chain transfer agent is not omitted from the initial stages of the polymerization, as evidenced by the rubber-reinforced copolymer prepared in Comparative Example 1, the particle size of the rubber is significantly larger. Such large particle size results in rubber-reinforced copolymer having less desirable physical properties than the rubber-reinforced copolymer having the relatively small rubber particles.

EXAMPLE 2

A rubber-reinforced copolymer comprising a copolymer matrix of styrene and acrylonitrile having rubber which exhibits a high solution viscosity dispersed therethrough, is prepared using several "plug-flow" type reactors essentially as described in U.S. Patent No. 2,727,884. The reactors are connected in series and each reactor is equipped with a variable speed agitator and heating and cooling means. To the top of the first reactor is continuously added a solution comprising 55 percent styrene, 17.3 percent acrylonitrile, 20 percent ethylbenzene, 7.5 percent of a low-cis, polybutadiene rubber exhibiting a solution viscosity as a 5 weight Percent solution in styrene of 150 mPa.s (centipoise), 0.2 percent of an antioxidant and 0.015 percent of a free radical initiator. During phase inversion and subsequent sizing of the rubber particles, the polymerization mixture is exposed to agitation rates of 240 rpm. Upon obtaining 40 percent solids, 12 parts, per each 100 parts of the feed stream, of a monomer mixture comprising 26 percent styrene, 11.4 percent acrylonitrile, 62.5 parts ethylbenzene and 0.5 percent of a chain transfer agent is added to the polymerization mixture. Following the addition of this mixture, the polymerization is continued until the desired conversion of monomer to polymer is achieved. The resulting mixture is then discharged from the base of the last reactor and passed to a devolatilizer, wherein the rubber is further cross-linked and the residual monomer and ethylbenzene are removed from the polymerization mixture. Upon analysis of the resulting rubber-reinforced copolymer product, the volume average particle size of the high molecular weight, low-cis homopolymer of butadiene was found to be 0.65 μm.

8

A rubber-reinforced copolymer is prepared using an identical technique except that the agitation provided at phase inversion and subsequent sizing of the rubber particles is at a rate of 200 rpm. Upon analysis of the final product, the volume average particle size of the rubber particles is found to be 0.62 $\mu$m.

Yet another rubber-reinforced copolymer is prepared using the same techniques except that the agitation provided at phase inversion and subsequent particle sizing is at a rate of 150 rpm. In this case, the rubber particles in the final product were found to have a volume average particle size of 0.65 $\mu$m. The rubber-reinforced polymer is designated Sample No. 1.

A rubber-reinforced copolymer prepared using identical techniques except that the phase inversion and subsequent sizing of the rubber particles is conducted at 90 rpm is found to have a rubber particle size of 0.88 $\mu$m. This copolymer product is designated as Sample No. 2. In addition, a rubber-reinforced copolymer is prepared by identical techniques except having an agitation rate of 60 rpm at phase inversion and subsequent sizing of the rubber exhibits a particle size of 1.35 $\mu$m.

As evidenced by the foregoing, a rubber-reinforced copolymer can be prepared having a rubber which exhibits a high solution viscosity dispersed therethrough at a relatively small particle size without requiring excessive agitation rated using the methods of this invention. In fact, using the chemical techniques disclosed herein for sizing the rubber, a minimum rubber particle size is obtained at a certain agitation rate above which further reductions in particle size are not achieved.

COMPARATIVE EXAMPLE

A rubber-reinforced copolymer comprising a copolymer matrix of styrene and acrylonitrile having a high molecular weight, low-cis homopolymer of butadiene dispersed therethrough is prepared using identical techniques to chose in preparing Sample No. 1 except that the feed solution comprises 0.15 percent of a chain transfer agent. The volume average particle size of the homopolymer of butadiene in the final product is 2.9 $\mu$m. This rubber-reinforced copolymer is designated Sample No. A.

The physical properties of Sample Nos. 1 and 2 and Sample No. A are measured to compare a rubber-reinforced polymer of the present invention with a rubber-reinforced copolymer prepared using conventional techniques. The results of this testing are reported in Table No. 1.

TABLE 1

| | Sample No. | | |
| --- | --- | --- | --- |
| | A[x] | 1 | 2 |
| Rubber particle Size, $\mu$m (1) | 2.9 | 0.65 | 0.88 |
| Izod Impact Strength, J/m(2) | | | |
| Room Temperature | 110 | 181 | 186 |
| $-20°$ C | 65 | 117 | 123 |
| Gloss, % (3) | | | |
| $15°$ C | 30 | 80 | 75 |
| $50°$ C | 40 | 90 | 85 |
| Tensile Properties (4) | | | |
| Yield, N/mm$^2$ | 30 | 42 | 38 |
| Elongation at Break, % | 30 | 5 | 35 |
| Melt Flow Rate g/10 min (5) | 2.2 | 2.0 | 1.6 |
| Charpy Impact Strength, KJ/m$^2$, (6) | 8 | 12.5 | 14.0 |

[x]Not an example of the present invention.

(1) Rubber particle size is the volume average particle size as determined using a commercially available particle size analyzer (e.g., a Counter Coulter Model TA II unit) supplemented as necessary by transmission electron microscopy.

(2) Izod impact strength is the notched Izod impact expressed in Joules/meter (J/m) measured using the test method described by ASTM D256 and test specimens which have been prepared by compression molding at a mold temperature of 220° C for 15 minutes. Impact testing is conducted at both room temperature and at -20° C.

(3) Gloss is measured using ASTM test method designated D523-80, 60° angle, on a sample molded at 50° C and a sample molded at 15° C. The sample molded at 50° C is prepared having dimensions of 10cm x 10cmx 2mm which is injection molded at a mold temperature of 50° C and a melt temperature of 215° C. The mold employed is a smooth surface mold having surface roughness factor 0.02. To prepare the test specimen the rubber-reinforced polymer is injected at an injection pressure which is increased until a flash molding appears and then reduced to a pressure such that no excess material (flash molding) appears. The injection pressure at that point is employed. The gloss is measured 3.5 cm from the side of the sample opposite the point of injection in the middle of the sample width. The 15° C sample is prepared in an identical manner except employing a 15° C mold temperature.

(4) Tensile properties are measured using the test methods of ASTM-D-638 on samples which are compression molded by the methods described in Footnote 2 with tensile yield being expressed in newtons per square millimeter (N/mm$^2$) and elongation being the % elongation at break.

(5) Melt flow rate is measured using test method designated ASTM D-1238, 230° C-3.8 kilopascals.

(6) Charpy impact strength, expressed in kilojoules per square meter KJ/m$^2$, is measured using the test method of DIN 53-453 on injection molded samples prepared in a manner similar to that set forth in Footnote 3.

As evidenced by the data in Table I, the physical properties of the ABS resin of the present, invention which comprises a copolymer matrix of styrene and acrylonitrile having a high molecular weight, low-cis rubber at a small particle size dispersed therethrough are significantly better than those properties exhibited by an ABS resin having rubber particles of a larger size dispersed through the copolymer matrix.

EXAMPLE 3

A rubber-reinforced copolymer comprising a copolymer matrix of stryrene and acrylonitrile having a high molecular weight, low-cis rubber dispersed therethrough is prepared using several "plug-flow" type reactors connected in series. Each reactor is equipped with a variable speed agitator and heating and cooling means. To the top of the first reactor is continuously added a solution comprising 56.3 percent styrene, 16 percent acrylonitrile, 20 percent ethylbenzene, 7.5 percent of a linear low-cis, high molecular weight polybutadiene rubber, 0.2 percent of an antioxidant and 0.015 percent of a free radical polymerization initiator. Prior to phase inversion, but after the polymerization mixture has obtained a 20 percent solids level, an additional 10 parts, per 100 parts of the feed, of a monomer mixture comprising 25 percent of styrene, 5 percent of acrylonitrile, 69.5 percent of ethylbenzene and 0.5 percent of a chain transfer agent is added to the polymerization mixture. Shortly thereafter, phase inversion occurs and the disperse rubber particles are subsequently sized. Polymerization is then continued at conditions sufficient to obtain the desired conversion of monomer to polymer. The resulting mixture is then discharged from the base of the last reactor and passed to a devolatilizer where the rubber is further cross-linked and the residual monomer and ethylbenzene removed from the polymerization mixture. This rubber-reinforced copolymer is designated Sample No.1.

A rubber-reinforced copolymer is prepared using the same techniques except that 12 parts, per 100 parts of the feed, of a second monomer mixture having the same composition as the second monomer mixture employed in preparing Sample No. 1 is added subsequent to phase inversion rather than prior to phase inversion when the solids level in the polymerization mixture reaches 30 percent. This rubber-reinforced copolymer is designated Sample No. 2.

Yet another rubber-reinforced copolymer is prepared using the techniques described in preparing Sample No. 2 except that the second monomer mixture is added (15 parts, per 100 parts of the feed) when the solids in the polymerization mixture is at 35 percent. This rubber-reinforced copolymer is designated Sample No. 3.

The volume average particle diameters and various physical properties of each of the thus prepared rubber-reinforced copolymer products are measured. The results of this testing are set forth in Table II. In addition, for purposes of comparison, the properties of Sample No. A of Example No. 2 are recorded in

Table II.

## TABLE II

|  | A* | 1 | 2 | 3 |
|---|---|---|---|---|
|  |  | Sample No. | | |
| Rubber Particle Size, μm (1) | 2.9 | 1.1 | 0.88 | 0.65 |
| Izod Impact Strength, J/m (2) | | | | |
| Room Temperature | 110 | 192 | 166 | 166 |
| -20° C | 65 | 133 | 112 | 112 |
| Gloss, % (3) | | | | |
| 15° C | 30 | 65 | 75 | 85 |
| 60° C | 40 | 85 | 87 | 92 |
| Tensile Properties (4) | | | | |
| Yield, N/mm$^2$ | 30 | 35 | 37 | 40 |
| Elongation, % | 30 | 40 | 30 | 5 |
| Melt Flow Rate, g/10min (5) | 2.2 | 1.5 | 2.0 | 2.0 |
| Charpy Impact Strength, Kj/m$^2$ (6) | 8 | 15 | 13.5 | 12.5 |

*Not an example of the present invention.

(1) Same as Note 1 in Table I
(2) Same as Note 2 in Table I
(3) Same as Note 3 in Table I
(4) Same as Note 4 in Table I
(5) Same as Note 5 in Table I
(6) Same as Note 6 in Table I

As evidenced by the data in Table II, the rubber-reinforced copolymers of the present invention exhibit a surprisingly good balance of physical properties. In addition, the volume average particle size is found to be affected by the amounts of chain transfer agent added to the polymerization mixture and the point of their addition. specifically, the rubber particle size is found to be smaller when chain transfer agent addition is delayed until after phase inversion. Moreover, if the chain transfer agent is added prior to phase inversion, the rubber particle size significantly depends on the concentration of the chain transfer agent and the place of its addition.

### EXAMPLE 4

A rubber-reinforced copolymer comprising a copolymer matrix of styrene and acrylonitrile having a rubber which exhibits a high solution viscosity dispersed therethrough is prepared using the techniques employed in the preparation of Sample No.1 of Example No. 3 except that the initial feed comprises 21.5 percent acrylonitrile, 50.3 percent styrene, 20 percent ethylbenzene, 8 percent of a linear, high molecular weight, low-cis polybutadiene 0.2 percent of an antioxidant and 0.015 percent of a free-radical initiator and when the polymerization mixture reaches about 20 percent solids, which occurs prior to phase inversion of the polymerization mixture, 14 parts, per 100 parts of the feed, of a second monomer-containing mixture comprising 11 percent acrylonitrile, 25.4 percent styrene, 63 percent ethylbenzene and 0.6 percent of a chain transfer agent is added to the polymerization mixture.

The volume average particle size of the dispersed rubber phase of the resulting product is 1.3 micrometer. The product exhibits an exceptional good balance of physical properties with an Izod impact of 160 J/m; a gloss of 60 percent at 50° C and 50% at 15° C mold temperature; a tensile yield of 39 N/mm², an elongation at break of 45 percent and a melt flow rate of 2.1 g/10 min.

EXAMPLE 5

A rubber-reinforced copolymer comprising a copolymer matrix of styrene and acrylonitrile having a rubber which exhibits a high solution viscosity dispersed therethrough is prepared using the techniques employed in the preparation of Sample No. 3 of Example No. 3 except that the initial feed comprises 12 percent acrylonitrile, 63.3 percent styrene, 20 percent ethylbenzene, 7.5 percent of a linear, high molecular weight, low-cis polybutadiene, 0.2 percent of an anti-oxidant and 0.015 percent of a free-radical initiator and when the polymerization mixture reaches about 35 percent solids, which occurs prior to phase inversion of the polymerization mixture, 6.5 parts, per 100 parts of the feed, of a second monomer-containing mixture comprising 11 percent acrylonitrile, 25.4 percent styrene, 62.1 percent ethylbenzene and 1.5 percent of a chain transfer agent is added to the polymerization mixture.

The volume average particle size of the disperse rubber phase of the resulting product is 0.9 μm. This product also exhibits an exceptional good balance of physical properties with an Izod impact of 190 J/m: a gloss of 90 percent at 50° C and 80 percent at 15° C mold temperature; a tensile yield of 34 N/mm², an elongation at break of 15 percent, a melt flow rate of 2.4 g/10 min and a charpy impact strength of 15 Kj/m².

EXAMPLE 6

A rubber-reinforced copolymer is prepared in a manner identical to that employed in Example 5, except that no second monomer mixture is added to the polymerization mixture. The resulting product which has been prepared using no chain transfer agent contains disperse rubber particles having a volume average particle size of 0.9 μm. The product exhibits a surprisingly high Izod impact of 213 J/m; a gloss of 85 percent at 50° C and 75 percent at 15° C mold temperature; a tensile yield of 34 N/mm², an elongation at break of 15 percent and a melt flow rate of 1.4 g/10 min.

EXAMPLE 7

A rubber-reinforced copolymer comprising a copolymer matrix of styrene and acrylonitrile having a rubber which exhibits a high solution viscosity dispersed therethrough is prepared using the techniques employed in the preparation of Sample No. 2 of Example No. 2, except that the initial feed comprises 22 percent acrylonitrile, 50.3 percent styrene, 20 percent ethylbenzene, 7.5 percent of a linear, high molecular weight, low-cis polybutadiene, 0.2 percent of an anti-oxidant and 0.015 percent of a free-radical initiator and when the polymerization mixture reaches about 17 percent solids, which occurs prior to phase inversion of the polymerization mixture, 9 parts, per 100 parts of the feed, of a second monomer-containing mixture comprising 11 percent acrylonitrile, 25.4 percent styrene and 63.6 percent ethylbenzene is added to the polymerization mixture.

The volume average particle size of the disperse rubber phase of the resulting product is 1.05 micrometer. This product also exhibits an exceptional good balance of physical properties with a surprisingly high Izod impact of 320 J/m; a gloss of 65 percent at 50° C and 50 percent at 15° C mold temperature; a tensile yield of 41 N/mm², an elongation at break of 30 percent, and a melt flow rate of 0.5 g/10 min.

EP 0 103 657 B1

**Claims**

1. A rubber-reinforced copolymer comprising a copolymer matrix derived from one or more monovinylidene aromatic monomers, one or more unsaturated nitrile monomers and, optionally, other comonomers, characterized by having at least 6 weight percent of a rubber based on the total weight of the rubber and copolymer, which rubber exhibits a viscosity, as a 5 weight percent solution in styrene, of at least 120 mPa.s (centipoise) dispersed as discrete particles in the matrix, said rubber particles containing occlusions of grafted and/or ungrafted copolymer and having a volume average particle size of 1.5 μm. or less.

2. The rubber-reinforced copolymer of Claim 1 wherein the rubber exhibits a viscosity, as a 5 weight percent solution in styrene, of at least 140 mPa.s (centipoise).

3. The rubber-reinforced copolymer of Claim 2 wherein the rubber is a linear, low-cis, homopolymer of butadiene having an uncorrected weight average molecular weight, as determined by the gel permeation chromatography described by ASTM D-3536 of at least 325,000 and the rubber is dispersed throughout the copolymer matrix at a volume average particle size of less than 1.2 μm.

4. The rubber-reinforced copolymer of Claim 3 wherein the unsaturated nitrile monomer is acrylonitrile, the monovinylidene aromatic monomer is styrene or a combination of styrene and α-methylstyrene.

5. The rubber-reinforced copolymer of Claim 4 wherein the monovinylidene aromatic monomer is styrene and the copolymer matrix has at least 7 weight percent of rubber, based on the total weight of the rubber and copolymer, dispersed throughout the copolymer phase at a particle size of less than 1.1 μm.

6. The rubber-reinforced copolymer of Claim 1 wherein the copolymer matrix is derived from at least one monovinylidene aromatic monomer, at least one unsaturated nitrile monomer and a polyvinylaromatic monomer.

7. The rubber-reinforced copolymer of Claim 1-6, wherein the rubber has a weight average molecular weight of at least 325,000.

8. A method of preparing a rubber-reinforced copolymer of a monovinylidene aromatic monomer, an unsaturated nitrile monomer and, optionally, one or more other comonomers comprising the steps of mass polymerizing a solution of the rubber and the monomers under conditions such that phase inversion occurs and the rubber becomes dispersed as particles and continuing polymerization, characterized by the use of rubber which exhibits a viscosity, as a 5 weight % solution in styrene, of at least 120 mPa.s (centipoises) in the monomer solution in an amount of at least 5 weight % based on the total weight of the monomers and the rubber; and polymerization conditions prior to phase inversion which form copolymer having a sufficiently high molecular weight such that upon phase inversion and forming of rubber particles, the rubber becomes dispersed at a volume average particle size of 1.5 μm or less without excessively agitating the polymerization mixture.

9. The method of Claim 8 wherein the solution of the rubber and monomers further comprises from 2 to 30 weight percent of an organic liquid diluent, said weight percent being based on the weight of the rubber, monomers and diluent.

10. The method of Claim 9 wherein the weight average molecular weight of the copolymer at phase inversion is at least 0.6 times the weight average molecular weight of the rubber.

11. The method of Claim 9 wherein the weight average molecular weight of the copolymer at phase inversion is at least 240,000.

12. The method of Claim 11 wherein at least a portion of the polymerization prior to phase inversion is conducted in the absence of a chain transfer agent.

13. The method of Claim 12 wherein the preparation of the rubber-reinforced copolymer product is

13

conducted both prior to and subsequent to phase inversion in the absence of a chain transfer agent.

14. The method of Claim 10 wherein the polymerization prior to phase inversion is conducted in the presence of a difunctional initiator.

15. The method of Claim 10 wherein the polymerization prior to phase inversion is conducted employing a sufficiently low concentration of chain transfer agent such that a copolymer of a desirably high molecular weight at phase inversion is prepared.

16. The method of Claim 10 wherein the polymerization of the monomers prior to phase inversion is conducted in the presence of a molecular weight extender.

17. The method of Claim 9 wherein the weight average molecular weight of the copolymer at phase inversion is at least 300,000 and the weight average molecular weight of the copolymer is at least 0.8 times the weight average molecular weight of the rubber.

18. The method of Claim 10 wherein the continued polymerization, following phase inversion, is conducted using mass polymerization techniques.

19. The method of Claim 10 wherein the continued polymerization, following phase inversion, is conducted using suspension polymerization techniques.

## Revendications

1. Copolymère renforcé au caoutchouc qui comprend une matrice de copolymère provenant d'un ou Plusieurs monomères monovinylidène-aromatique, d'un ou plusieurs monomères nitrile insaturé et, éventuellement d'autres comonomères, caractérisé en ce qu'il possède au moins 6 pour-cent en poids d'un caoutchouc, par rapport au poids total du caoutchouc et du copolymère, caoutchouc qui présente une viscosité, à l'état de solution à 5 pour-cent en poids dans le styrène, d'au moins 120 mPa.s (centipoise) en dispersion sous la forme de particules distinctes dans la matrice, lesdites particules de caoutchouc contenant des occlusions de copolymère greffé et/ou non greffé et ayant une grosseur moyenne des particules en volume de 1,5 $\mu$m ou moins.

2. Copolymère renforcé au caoutchouc selon la revendication 1, dans lequel le caoutchouc présente une viscosité, à l' état de solution à 5 pour-cent en poids dans le styrène, d'au moins 140 mPa.s (centipoise).

3. Copolymère renforcé au caoutchouc selon la revendication 2, dans lequel le caoutchouc est un homopolymère de butadiène, linéaire, à faible en teneur en cis, ayant une masse moléculaire moyenne en poids non corrigée, telle que déterminée par la chromatographie par perméation de gel décrite par ASTM D-3536, d'au moins 325.000, et le caoutchouc étant dispersé dans la matrice de copolymère avec une grosseur moyenne des particules en volume de moins de 1,2 $\mu$m.

4. Copolymère renforcé au caoutchouc selon la revendication 3, dans lequel le monomère nitrile insaturé est l'acrylonitrile, le monomère monovinylidène-aromatique est le styrène ou une combinaison de styrène et d'alpha-méthylstyrène.

5. Copolymère renforcé au caoutchouc selon la revendication 4, dans lequel le monomère monovinylidène-aromatique est le styrène et la matrice de copolymère possède au moins 7 pour-cent en poids de caoutchouc, par rapport au poids total du caoutchouc et du copolymère, dispersé dans la phase copolymère avec une grosseur de particules inférieure à 1,1 $\mu$m.

6. Copolymère renforcé au caoutchouc selon la revendication 1, dans lequel la matrice de copolymère provient d'au moins un monomère monovinylidène-aromatique, d'au moins un monomère nitrile insaturé et d'un monomère polyvinyl-aromatique.

7. Copolymère renforcé au caoutchouc selon les revendications 1 - 6, dans lequel le caoutchouc possède

EP 0 103 657 B1

une masse moléculaire moyenne en poids d'au moins 325.000.

8. Procédé de préparation d'un copolymère renforcé au caoutchouc d'un monomère monovinylidène-aromatique, d'un monomère nitrile insaturé et, éventuellement, d'un ou plusieurs autres comonomères, qui comprend les étapes de polymérisation en masse d'une solution du caoutchouc et des monomères dans des conditions telles qu'une inversion de phase se produit et le caoutchouc devient dispersé sous la forme de particules et de poursuite de la polymérisation, caractérisé par l'utilisation d'un caoutchouc qui présente une viscosité, à l'état de solution à 5 % en poids dans le styrène, d'au moins 120 mPa.s (centipoise), en solution dans le monomère en une quantité d'au moins 5 pour-cent en poids par rapport au poids total des monomères et du caoutchouc ; et des conditions de polymérisation avant l'inversion de phase qui forment un copolymère ayant une masse moléculaire suffisamment élevée de telle sorte que lors de l'inversion de phase et de la formation des particules de caoutchouc, le caoutchouc devient dispersé avec une grosseur moyenne des particules en volume de 1,5 μm ou moins, sans agitation excessive du mélange de polymérisation.

9. Procédé selon la revendication 8, dans lequel la solution du caoutchouc et des monomères comprend en outre de 2 à 30 pour-cent en poids d'un diluant liquide organique, ledit pourcentage pondéral étant rapporté au poids du caoutchouc, des monomères et du diluant.

10. Procédé selon la revendication 9, dans lequel la masse moléculaire moyenne en poids du copolymère à l'inversion de phase est au moins 0,6 fois la masse moléculaire moyenne en poids du caoutchouc.

11. Procédé selon la revendication 9, dans lequel la masse moléculaire moyenne en poids du copolymère à l'inversion de Phase est d'au moins 240.000.

12. Procédé selon la revendication 11, dans lequel on effectue au moins une portion de la polymérisation avant l'inversion de phase en l'absence d'un agent de transfert de chaîne.

13. Procédé selon la revendication 12, dans lequel on effectue la préparation du produit copolymère renforcé au caoutchouc à la fois avant et après l'inversion de phase en l'absence d'un agent de transfert de chaîne.

14. Procédé selon la revendication 10, dans lequel on effectue la polymérisation avant l'inversion de phase en présence d'un amorceur difonctionnel.

15. Procédé selon la revendication 10, dans lequel on effectue la polymérisation avant l'inversion de phase à l'aide d'une concentration suffisamment faible d'agent de transfert de chaîne de telle sorte que l'on prépare un copolymère d'une masse moléculaire convenablement élevée à l'inversion de phase.

16. Procédé selon la revendication 10, dans lequel on effectue la polymérisation des monomères avant l'inversion de phase en présence d'un agent de renforcement de la masse moléculaire.

17. Procédé selon la revendication 9, dans lequel la masse moléculaire moyenne en poids du copolymère à l'inversion de phase est d'au moins 300.000 et la masse moléculaire moyenne en poids du copolymère est d'au moins 0,8 fois la masse moléculaire moyenne en poids du caoutchouc.

18. Procédé selon la revendication 10, dans lequel on effectue la poursuite de la polymérisation, après l'inversion de phase, à l'aide des techniques de polymérisation en masse.

19. Procédé selon la revendication 10, dans lequel on effectue la poursuite de la polymérisation, après l'inversion de phase, à l'aide de techniques de polymérisation en suspension.

**Ansprüche**

1. Kautschukverstärktes Copolymer, enthaltend eine Copolymermatrix, erhalten aus einem oder mehreren monovinylidenaromatischen Monomeren, einem oder mehreren ungesättigten Nitrilmonomeren und, gegebenenfalls, anderen Comonomeren,

15

**dadurch gekennzeichnet,**
daß dieses wenigstens 6 Gew.-% eines Kautschuks, bezogen auf das Gesamtgewicht des Kautschuks und Copolymers, aufweist, wobei dieser Kautschuk eine Viskosität, als 5-gewichtsprozentige Lösung in Styrol , von wenigstens 120 mPa.s (Centipoise) , dispergiert als einzelne Teilchen in einer Matrix, aufweist, wobei diese Kautschukteilchen Einschlüsse von gepfropften und/oder ungepfropften Copolymeren enthalten und eine volumenmittlere Teilchengröße von 1,5 μm oder weniger besitzen.

2. Kautschukverstärktes Copolymer nach Anspruch 1,
**dadurch gekennzeichnet,**
daß der Kautschuk eine Viskosität, als 5-gewichtsprozentige Lösung in Styrol, von wenigstens 140 mPa.s (Centipoise) aufweist.

3. Kautschukverstärktes Copolymer nach Anspruch 2,
**dadurch gekennzeichnet,**
daß der Kautschuk ein lineares, niedrig-cis Homopolymer von Butadien ist, mit einem unkorrigierten gewichtsmittleren Molekulargewicht, bestimmt mittels Gelpermeationschromatographie, wie in der ASTM D-3536 beschrieben, von wenigstens 325.000 und der Kautschuk innerhalb der Copolymermatrix auf eine volumenmittlere Teilchengröße von weniger als 1,2 μm dispergiert ist.

4. Kautschukverstärktes Copolymer nach Anspruch 3,
**dadurch gekennzeichnet,**
daß das ungesättigte Nitrilmonomer Acrylnitril , das monovinylidenaromatische Monomer Styrol oder eine Kombination aus Styrol und alpha-Methylstyrol ist.

5. Kautschukverstärktes Copolymer nach Anspruch 4,
**dadurch gekennzeichnet,**
daß das monovinylidenaromatische Monomer Styrol ist und die Copolymermatrix wenigstens 7 Gew.-% Kautschuk, bezogen auf das Gesamtgewicht an Kautschuk und Copolymer, aufweist, welcher innerhalb der Copolymerphase auf eine Teilchengröße von weniger als 1,1 μm dispergiert ist.

6. Kautschukverstärktes Copolymer nach Anspruch 1,
**dadurch gekennzeichnet,**
daß die Copolymermatrix aus wenigstens einem monovinylidenaromatischen Monomer, wenigstens einem ungesättigten Nitrilmonomer und einem polyvinylaromatischen Monomer erhalten wird.

7. Kautschukverstärktes Copolymer nach Ansprüchen 1-6,
**dadurch gekennzeichnet,**
daß der Kautschuk ein gewichtsmittleres Molekulargewicht von wenigstens 325.000 aufweist.

8. Verfahren zur Herstellung eines kautschukverstärkten Copolymers aus einem monovinylidenaromatischen Monomer, einem ungesättigten Nitrilmonomer und, gegebenenfalls, einem oder mehreren anderen Comonomeren, enthaltend die Schritte der Massepolymerisation einer Lösung von Kautschuk und den Monomeren unter Bedingungen, so daß eine Phaseninversion eintritt und der Kautschuk als Teilchen dispergiert wird, und Fortführung der Polymerisation,
**dadurch gekennzeichnet,**
daß ein Kautschuk verwendet wird, welcher eine Viskosität, als 5-gewichtsprozentige Lösung in Styrol, von wenigstens 120 mPa.s (Centipoise) in der Monomerlösung in einer Menge von wenigstens 5 Gew.-%, bezogen auf das Gesamtgewicht an Monomeren und Kautschuk, ausmacht, und daß die Polymerisationsbedingungen vor der Phaseninversion, die das Copolymer mit genügend hohem Molekulargewicht bildet, so gewählt wird, daß bei der Phaseninversion und der Bildung der Kautschukpartikel der Kautschuk mit einer volumenmittleren Teilchengröße von 1,5 μm oder weniger dispergiert wird, ohne die Polymerisationsmischung übermäßig zu rühren.

9. Verfahren nach Anspruch 8,
**dadurch gekennzeichnet,**
daß die Lösung des Kautschuks und der Monomeren weiterhin 2 bis 30 Gew.-% eines organischen flüssigen Verdünnungsmittels enthält, wobei sich diese Gewichtsprozentangaben auf das Gewicht des Kautschuks, der Monomeren und des Verdünnungsmittels beziehen.

**10.** Verfahren nach Anspruch 9,
**dadurch gekennzeichnet,**
daß das gewichtsmittlere Molekulargewicht des Copolymers bei der Phaseninversion wenigstens 60 % des gewichtsmittleren Molekulargewichts des Kautschuks ausmacht.

**11.** Verfahren nach Anspruch 9,
**dadurch gekennzeichnet,**
daß das gewichtsmittlere Molekulargewicht des Copolymeren bei Phaseninversion wenigstens 240.000 beträgt.

**12.** Verfahren nach Anspruch 11,
**dadurch gekennzeichnet,**
daß wenigstens ein Teil der Polymerisation vor der Phaseninversion in Abwesenheit eines Kettenübertragungsmittels durchgeführt wird.

**13.** Verfahren nach Anspruch 12,
**dadurch gekennzeichnet,**
daß die Herstellung des kautschukverstärkten Copolymerprodukts sowohl vor wie nach der Phaseninversion in Abwesenheit eines Kettenübertragungsmittels durchgeführt wird.

**14.** Verfahren nach Anspruch 10,
**dadurch gekennzeichnet,**
daß die Polymerisation vor der Phaseninversion in Gegenwart eines difunktionellen Initiators durchgeführt wird.

**15.** Verfahren nach Anspruch 10,
**dadurch gekennzeichnet,**
daß die Polymerisation vor der Phaseninversion durchgeführt wird, indem eine genügend kleine Konzentration an Kettenübertragungsmittel verwandt wird, so daß das Copolymer mit einem gewünschten hohen Molekulargewicht bei der Phaseninversion hergestellt wird.

**16.** Verfahren nach Anspruch 10,
**dadurch gekennzeichnet,**
daß die Polymerisation der Monomeren vor der Phaseninversion in Gegenwart eines Molekulargewichtstreckmittels durchgeführt wird.

**17.** Verfahren nach Anspruch 9,
**dadurch gekennzeichnet,**
daß das gewichtsmittlere Molekulargewicht des Copolymers bei der Phaseninversion wenigstens 300.000 beträgt und das gewichtsmittlere Molekulargewicht des Copolymeren wenigstens 80 % des gewichtsmittleren Molekulargewichts des Kautschuks ausmacht.

**18.** Verfahren nach Anspruch 10,
**dadurch gekennzeichnet,**
daß die kontinuierliche Polymerisation, gefolgt von der Phaseninversion, unter Verwendung von Techniken der Massepolymerisation durchgeführt wird.

**19.** Verfahren nach Anspruch 10,
**dadurch gekennzeichnet,**
daß die kontinuierliche Polymerisation, gefolgt von der Phaseninversion, unter Verwendung von Techniken der Suspensionspolymerisation durchgeführt wird.